# EUROPÄISCHE PATENTSCHRIFT

(11) **EP 1 530 604 B1**
(45) Veröffentlichungstag und Bekanntmachung des Hinweises auf die Patenterteilung: **20.07.2011**
(21) Anmeldenummer: 03793633.3
(22) Anmeldetag: 24.07.2003
(51) Int. Cl.: C08G 18/70, C08G 18/78, C08G 18/72, C08G 18/79, C09D 175/00, C09J 175/00

(54) **WASSEREMULGIERBARE ISOCYANATE MIT VERBESSERTEN EIGENSCHAFTEN**
WATER EMULSIFABLE ISOCYANATES HAVING IMPROVED PROPERTIES
ISOCYANATES EMULSIFIABLES A L'EAU, PRESENTANT DES PROPRIETES AMELIOREES

(30) Priorität: 15.08.2002 DE 10238148
(43) Veröffentlichungstag der Anmeldung: 18.05.2005
(73) Patentinhaber: BASF SE, 67056 Ludwigshafen (DE)
(72) Erfinder: HÄBERLE, Karl, 67346 Speyer (DE); WAGNER, Eva, 67346 Speyer (DE); KÖNIGER, Rainer, Clifton Park, NY 12065, NY 12065 (US); HÖRNER, Klaus Dieter, 68623 Lampertheim (DE)
(86) Internationale Anmeldenummer: PCT/EP2003/008095
(87) Internationale Veröffentlichungsnummer: WO 2004/022623

(56) Entgegenhaltungen:
- EP-A- 0 486 881
- EP-A- 0 959 087
- WO-A-01/38415

## Beschreibung

Die Erfindung betrifft wasseremulgierbare Isocyanate mit verbesserter Emulgierbarkeit und erhöhter Härte von mit diesen erhaltenen Beschichtungen, Verfahren zu deren Herstellung und deren Verwendung.

Wasseremulgierbare Polyisocyanate werden wässrigen Polymer-Dispersionen als Vernetzungsmittel zugesetzt und sind in der Literatur vielfach beschrieben. Die Wasseremulgierbarkeit wird dadurch erreicht, dass man die Polyisocyanate mit Emulgatoren abmischt, die durch Reaktion der Polyisocyanate mit hydrophilen Molekülen erhalten werden.

Als hydrophile Moleküle vielfach verwendet werden nichtionische hydrophile Moleküle wie Polyalkylenoxid-Alkohole.

EP-A2 206 059 beschreibt in Wasser dispergierbare PolyisocyanatZubereitungen aus einem aliphatischen Polyisocyanat und einem Umsetzungsprodukt eines aliphatischen Polyisocyanats mit einem ein- oder mehrwertigen, nichtionischen Polyalkylenetheralkohol mit mindestens einer mindestens 10 Ethylenoxideinheiten aufweisenden Polyetherkette als Emulgator. Für geeignete Polyisocyanate werden umfangreiche Listen von aliphatischen und cycloaliphatischen Diisocyanaten angegeben, besonders bevorzugt Isocyanurate und Biurete auf Basis von 1,6-Diisocyanatohexan (HDI) und/oder Isocyanurate auf Basis von 1-Isocyanato-3,5,5-trimethyl-5-isocyanatomethyl-cyclohexan (IPDI).

EP-A1 540 985 beschreibt ebenfalls Polyisocyanatgemische, hier weisen jedoch die Polyetherketten einen mittleren Gehalt von 5,0 bis 9,9 Ethylenoxideinheiten auf.

EP-A2 486 881 beschreibt nichtwäßrige aliphatische Polyisocyanatzubereitungen aus einer Liste von aliphatischen Polyisocyanaten und einer die Dispergierbarkeit des aliphatischen Polyisocyanats gewährleistenden Menge eines Umsetzungsproduktes aus einem aromatischen oder aliphatischen Diisocyanat und einem ein- oder mehrwertigen Polyalkylenetheralkohol mit mindestens 8 Ethylenoxideinheiten in der Polyetherkette.

DE-A1 199 58 170 beschreibt Polyether-modifizierte, wasserdispergierbare Polyisocyanatgemische, die mit einwertigen Polyalkylenoxidpolyetheralkoholen modifiziert sind. Ganz besonders bevorzugt sind Polyisocyanate beziehungsweise Polyisocyanatgemische mit Isocyanuratstruktur auf Basis HDI, IPDI und/oder 4,4'-Diisocyanatodicyclohexylmethan.

DE-A1 198 22 890 beschreibt wäßrige, zweikomponentige Polyurethan-Beschichtungssysteme, deren Härterkomponente aus Polyalkylenoxidpolyetheralkoholen und aliphatisch und/oder cycloaliphatisch gebundenen Isocyanatgruppen, bevorzugt Isocyanuratstrukturen auf Basis von HDI, IPDI und/oder 4,4'-Diisocyanatodicyclohexylmethan, unter Allophanatisierungsbedingungen hergestellt werden. Die überwiegende Bindung von Polyetherketten über Allophanatgruppen ist auch aus der DE-A1 198 47 077 bekannt.

Als nichtionische Emulgatoren sind auch mit Polyvinylpyrrolidon modifizierte Polyisocyanate beschrieben (EP-A2 754 713).

Als dispergieraktive Bausteine finden auch Carbonsäuregruppen enthaltende Polyalkylenoxidether Verwendung, wie in der DE-A1 100 07 820 und DE-A1 41 13 160 beschrieben, oder Polyetheresteralkohole (EP-A1 728 785).

DE-A1 40 01 783 beschreibt Polyisocyanatgemische, die bei einem Uretdiongehalt von 1 bis 23 Gew% zur Dispergierbarkeit chemisch gebundene Carboxylgruppen enthalten.

Weiterhin werden Carboxylgruppen enthaltende Verbindungen als Emulgatoren beschrieben (EP-A2 548 669), tertiäre Amino- und/oder Ammoniumgruppen (EP-A1 582 166 und EP-A1 531 820), saure Ester der Phosphorsäure (DE-A1 197 24 199) oder Sulfonsäuren (EP-A1 703 255).

Nachteilig an den beschriebenen Polyisocyanatmischungen ist, daß diese die Anforderungen, die an die Härte der mit ihnen erhältlichen Beschichtungen gestellt werden, nicht erfüllen.

Wasseremulgierbare Isocyanate können zur Verbesserung der Dispergierbarkeit in organischen Lösungsmitteln wie z.B. Kohlensäureestern oder Lactonen gelöst werden, wie in der EP-A 697 424 beschrieben.

Aus "Lackharze" (Ed. D. Stoye und W. Freitag, Hanser 1996, S. 195) ist bekannt, dass IPDI-Trimerisat, das Lackharzen eine vergleichsweise hohe Härte bis hin zur Sprödigkeit verleiht, häufig in Abmischungen mit HDI-Derivaten zum Einsatz kommt, um die Härte zu vermindern.

Folgende Eigenschaften eines wasseremulgierbaren Isocyanats werden vom Anwender verlangt:
1. Das Isocyanat soll einfach zu emulgieren sein; die zwingende Verwendung anspruchsvoller Apparate wie z.B. hochscherenden Rührorganen ist nicht erwünscht.
2. Die Emulsion soll feinteilig sein, da ansonsten Störungen z.B des Glanzes oder Trübungen auftreten können.
3. Bei Beschichtungen ist häufig eine hohe Endhärte erwünscht.
4. Die Endhärte soll möglichst rasch erreicht werden.

Aufgabe der vorliegenden Erfindung war es, wasseremulgierbare Polyisocyanate zur Verfügung zu stellen, die verbesserte Emulgierbarkeitseigenschaften zeigen und mit denen Beschichtungen mit hoher Härte, schnellem Härteanstieg und gleichzeitig verbesserter Emulgierbarkeit hergestellt werden können.

Die Aufgabe wurde gelöst durch Mischungen, enthaltend
(A) ein Isocyanurat und/oder Biuret des 1,6-Diisocyanatohexan (HDI),
(B) ein Isocyanurat des 1-Isocyanato-3,5,5-trimethyl-5-isocyanatomethyl-cyclohexan (IPDI),
(C) mindestens einen Emulgator, erhältlich durch Umsetzung mindestens eines Diisocyanats (C2) ausgewählt aus Tetramethylendiisocyanat, Hexamethylendiisocyanat (HDI), Dodecamethylendiisocyanat, 1,4-Diisocyanatocyclohexan, 4,4'-Di(isocyanatocyclohexyl)methan, Trimethylhexandiisocyanat, Tetramethylhexandiisocyanat, 1-Isocyanato-3,3,5-trimethyl-5-(isocyanatomethyl)cyclohexan (IPDI), 2,4- oder 2,6-Toluylendiisocyanat und deren Isomerengemische, Tetramethylxylylendiisocyanat, p-Xylylendiisocyanat, 2,4'- oder 4,4'-Diisocyanatodiphenylmethan mit mindestens einer Komponente (C1), die mindestens eine gegenüber Isocyanatgruppen reaktive Gruppe und mindestens eine hydrophile Gruppe enthält, und
(D) gegebenenfalls Lösungsmittel.

Die erfindungsgemäßen Mischungen zeigen leichte Emulgierbarkeit, führen zu einer stabilen und feinteiligen Emulsion und die mit ihnen erhältlichen Beschichtungen zeigen einen raschen Anstieg der Härte und eine hohe Endhärte.

Polyisocyanate (A) sind Isocyanurate (A1) und/oder Biurete (A2) des 1,6-Diisocyanatohexan (HDI). Dies umfaßt erfindungsgemäß solche Polyisocyanate, die zu mindestens 50 Gew%, bevorzugt zu mindestens 66%, besonders bevorzugt zu mindestens 75%, ganz besonders bevorzugt zu mindestens 85 % und insbesondere zu mindestens 95 Gew% Verbindungen der Formel (Ia) und/oder (Ib), 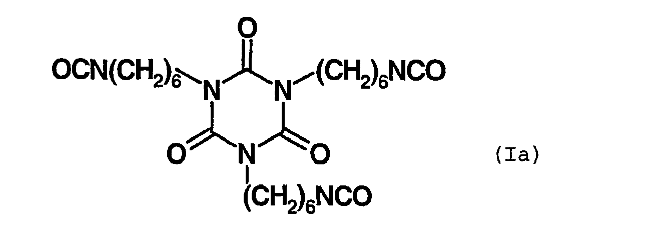 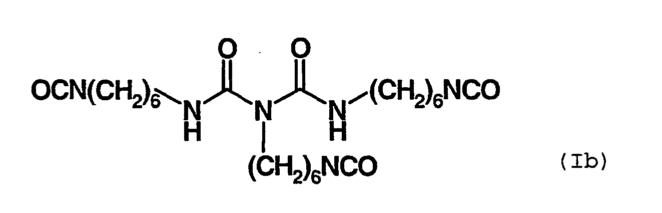 sowie deren höheren Homologen enthalten.

Die Zusammensetzung der Polyisocyanate, also beispielsweise die Anteile an Isocyanuraten und/oder Biureten und deren höheren Homologen, sowie die mittlere Funktionalität werden in dieser Schrift bestimmt durch Gelpermeationschromatographie mit Polystyrol als Standard und Tetrahydrofuran als Elutionsmittel.

Polyisocyanate (B) sind Isocyanurate des 1-Isocyanato-3,5,5-trimethyl-5-isocyanatomethyl-cyclohexan (IPDI). Dies umfaßt erfindungsgemäß solche Polyisocyanate, die zu mindestens 50 Gew%, bevorzugt zu mindestens 66%, besonders bevorzugt zu mindestens 75%, ganz besonders bevorzugt zu mindestens 85 % und insbesondere zu mindestens 95 Gew% die Verbindung der Formel (II), 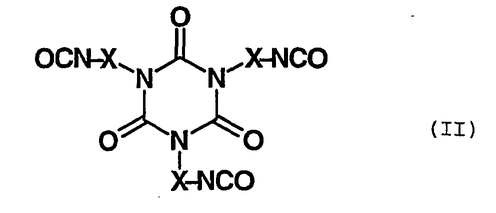 worin X für 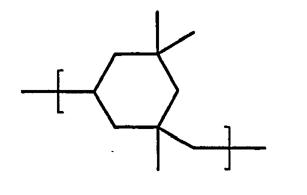 steht,
sowie deren höhere Homologen enthalten.

Als Emulgatoren (C) sind erfindungsgemäß solche Verbindungen geeignet, die durch Umsetzung mindestens eines Diisocyanats (C2) mit mindestens einer, bevorzugt 1 bis 2, besonders bevorzugt einer Komponente (C1) erhältlich sind, die mindestens eine gegenüber Isocyanatgruppen reaktive Gruppe und mindestens eine hydrophile Gruppe enthält. (C1) wird im Folgenden als "Hydrophil" bezeichnet.

Gegenüber Isocyanatgruppen reaktive Gruppen sind beispielsweise Hydroxygruppen (-OH), un- oder monosubstituierte Aminogruppen oder Mercaptogruppen (-SH), bevorzugt Hydroxygruppen.

Die Emulgatoren (C) enthalten die Komponente (C1) somit in der Regel chemisch gebunden.

Bei den Komponenten (C1) kann es sich beispielsweise um solche Verbindungen handeln, wie sie im Stand der Technik, beispielsweise aus dem eingangs genannten Stand der Technik, bekannt sind.

Im einzelnen können dies Verbindungen sein, die mindestens eine gegenüber Isocyanatgruppen reaktive Gruppe und
- (C1a) mindestens eine kationische hydrophile Gruppe,
- (C1b) mindestens eine anionische hydrophile Gruppe oder
- (C1c) mindestens eine nichtionische hydrophile Gruppe enthalten.

Bevorzugte Verbindungen (C1) enthalten 1 bis 3 gegenüber Isocyanatgruppen reaktive Gruppe und 1 bis 3 hydrophile Gruppen, besonders bevorzugt 1 bis 2 gegenüber Isocyanatgruppen reaktive Gruppe und 1 bis 2 hydrophile Gruppen und ganz besonders bevorzugt eine gegenüber Isocyanatgruppen reaktive Gruppe und eine hydrophile Gruppe.

Verbindungen (C1a) enthalten mindestens eine gegenüber Isocyanatgruppen reaktive Gruppe und mindestens eine kationische oder in eine kationische Gruppe überführbare hydrophile Gruppe und sind beispielsweise solche, wie sie in der EP-A1 582 166, dort besonders von S. 5, Z. 42 bis S. 8, Z. 22 und insbesondere von S. 9, Z. 19 bis S. 15, Z. 34, oder in der EP-A1 531 820, dort besonders von S. 3, Z. 21 bis S. 4, Z. 57 oder in DE-A1 42 03 510, dort besonders von S. 3, Z. 49 bis S. 5, Z. 35 beschrieben sind. Auf diese Schriften wird im Rahmen der vorliegenden Offenbarung hiermit ausdrücklich Bezug genommen.

Verbindungen (C1b) enthalten mindestens eine gegenüber Isocyanatgruppen reaktive Gruppe und mindestens eine anionische oder in eine anionische Gruppe überführbare hydrophile Gruppe und sind beispielsweise solche, wie sie in der EP-A1 703 255, dort besonders von S. 3, Z. 54 bis S. 4, Z. 38, in der DE-A1 197 24 199, dort besonders von S. 3, Z. 4 bis Z. 30, in der DE-A1 40 10 783, dort besonders von Sp. 3, Z. 3 bis Z. 40, in der DE-A1 41 13 160, dort besonders von Sp. 3, Z. 63 bis Sp. 4, Z. 4 und in der EP-A2 548 669, dort besonders von S. 4, Z. 50 bis S. 5, Z. 6 beschrieben sind. Auf diese Schriften wird im Rahmen der vorliegenden Offenbarung hiermit ausdrücklich Bezug genommen.

Verbindungen (C1c) enthalten mindestens eine gegenüber Isocyanatgruppen reaktive Gruppe und mindestens eine nichtionische hydrophile Gruppe und sind beispielsweise solche, wie sie in EP-A2 754 713, dort besonders von S. 3, Z. 31 bis 51, in EP-A2 206 059, dort besonders von S. 8, Z. 33 bis S. 9, Z. 26, in EP-A2 486 881, dort besonders von S. 2, Z. 42 bis 54, in EP-A1 540 985, dort besonders von S. 4, Z. 43 bis 58, in EP-A1 728 785, dort besonders von S. 4, Z. 55 bis S. 5, Z. 54, in EP-A1 959 115, dort besonders von S. 4, Z. 23 bis 46, in DE-A1 199 58 170, dort besonders von S. 4, Z. 22 bis 48 und in DE-A1 100 07 820, dort besonders von S. 4, Z. 10 bis S. 5, Z. 12. Auf diese Schriften wird im Rahmen der vorliegenden Offenbarung hiermit ausdrücklich Bezug genommen.

Bevorzugt handelt es sich bei den Hydrophilen (C1) um Verbindungen (C1c), die mindestens eine gegenüber Isocyanatgruppen reaktive Gruppe und mindestens eine nichtionische hydrophile Gruppe enthalten.

Besonders bevorzugte Hydrophile (C1c) sind Polyalkylenoxidpolyetheralkohole, die durch Alkoxylierung geeigneter Startermoleküle erhältlich sind.

Geeignete Startermoleküle zur Herstellung einwertiger Polyalkylenoxidpolyetheralkohole sind Thiolverbindungen, Monohydroxyverbindungen der allgemeinen Formel

R¹-O-H

oder sekundäre Monoamine der allgemeinen Formel

R²R³N-H,

in welchen
R¹, R² und R³ unabhängig voneinander unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünfbis sechsgliedrigen, Sauerstoff-, Stickstoff- und/oder Schwefelatome aufweisenden Heterocyclus bedeuten oder R² und R³ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt ist R¹ C₁- bis C₄-Alkyl, d.h. Methyl, Ethyl, *iso*-Propyl, n-Propyl, n-Butyl, iso-Butyl, sek-Butyl oder tert-Butyl, besonders bevorzugt ist R¹ Methyl.

Beispielsweise geeignete einwertige Startermoleküle können gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, nDodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol, sowie Aminoalkohole wie 2Dimethylaminoethanol, 2-Diethylaminoethanol, 2-Diisopropylaminoethanol, 2-Dibutylaminoethanoi, 3-(Dimethylamino)-1-propanol oder 1(Dimethylamino)-2-propanol.

Für die Alkoxylierungsreaktion geeignete Alkylenoxide sind Ethylenoxid, Propylenoxid, iso-Butylenoxid, Vinyloxiran und/oder Styroloxid, die in beliebiger Reihenfolge oder auch im Gemisch bei der Alkoxylierungsreaktion eingesetzt werden können. Bevorzugte Alkylenoxide sind Ethylenoxid, Propylenoxid und deren Gemische, besonders bevorzugt ist Ethylenoxid.

Bevorzugte Verbindungen (C1c) sind Polyetheralkohole auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel 5 bis 35, vorzugsweise 7 bis 30, besonders bevorzugt 7 bis 25, ganz besonders bevorzugt 10 bis 22 Alkylenoxideinheiten pro Molekül auf, insbesondere 10 bis 22 Ethylenoxideinheiten.

Bevorzugte Polyetheralkohole (C1c) sind somit Verbindungen der Formel

R¹-O-[-Xi-]ₖ-H

worin
R¹ die oben genannten Bedeutungen hat,
k für eine ganze Zahl von 5 bis 35, bevorzugt 7 bis 30, besonders bevorzugt 7 bis 25 und insbesondere 10 bis 22 steht und jedes Xi für i = 1 bis k unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-worin Ph für Phenyl und Vin für Vinyl steht.

Die Polyetheralkohole können in untergeordneten Mengen noch weitere gegenüber Isocyanaten reaktive Verbindungen mit anionischen oder kationischen Gruppen, beispielsweise mit Carboxylat-, Sulfonat- oder Ammoniumgruppen, als hydrophile Aufbaukomponenten enthalten. Dies ist jedoch weniger bevorzugt.

Diisocyanate (C2) sind erfindungsgemäß ausgewählt aus der Gruppe bestehend aus Tetramethylendiisocyanat, Hexamethylendiisocyanat, Dodecamethylendiisocyanat, 1,4-Diisocyanatocyclohexan, 4,4'-Di(isocyanatocyclohexyl)methan, Trimethylhexandiisocyanat, Tetramethylhexandiisocyanat, 1-Isocyanato-3,3,5-trimethyl-5-(isocyanatomethyl)cyclohexan, 2,4- oder 2,6-Toluylendiisocyanat und deren Isomerengemische, Tetramethylxylylendiisocyanat, p-Xylylendiisocyanat, 2,4'- oder 4,4'-Diisocyanatodiphenylmethan, sowie ein Gemisch aus mindestens zweien dieser Diisocyanate. Bevorzugt ist jedoch die Umsetzung einer dieser Komponenten beziehungsweise eines Isomerengemischs.

Besonders bevorzugt sind Hexamethylendiisocyanat, 4,4'-Di(isocyanatocyclohexyl)methan, 1-Isocyanato-3,3,5-trimethyl-5-(isocyanatomethyl)cyclohexan, Tetramethylxylylendiisocyanat, 2,4'- oder 4,4'-Diisocyanatodiphenylmethan und 2,4- oder 2,6-Toluylendiisocyanat und deren Isomerengemische, ganz besonders bevorzugt sind Hexamethylendiisocyanat, 1-Isocyanato-3,3,5-trimethyl-5-(isocyanatomethyl)cyclohexan und 2,4- oder 2,6-Toluylendiisocyanat und insbesondere 2,4- oder 2,6-Toluylendiisocyanat und deren Isomerengemische.

Die Diisocyanate liegen in der Rege1 zu mindestens 75 mol% als Monomere vor, bevorzugt zu mindestens 85 mol%, besonders bevorzugt zu mindestens 90 und ganz besonders bevorzugt zu mindestens 95 mol%.

Zur Umsetzung der Diisocyanate (C2) mit den gegenüber Isocyanat reaktiven Verbindungen (C1) verwendet man üblicherweise 60 bis 120, bevorzugt 80 bis 120, besonders bevorzugt 90 bis 110 und insbesondere 100 mol% an gegenüber Isocyanat reaktiven Gruppen in (C1) pro mol Isocyanatgruppen in (C2).

Zur Herstellung der als Emulgator (C) wirksamen Komponente werden die Ausgangskomponenten (C1) und (C2) bei Temperaturen von 40 bis 180°C, vorzugsweise 50 bis 150°C, unter Einhaltung des genannten Molverhältnisses miteinander umgesetzt.

Die Reaktionsdauer beträgt in der Regel 10 min bis 5 Stunden, bevorzugt 15 min bis 4 Stunden, besonders bevorzugt 20 bis 180 min und ganz besonders bevorzugt 30 bis 120 min.

Zur Beschleunigung der Reaktion können gegebenenfalls geeignete Katalysatoren eingesetzt werden.

Hierbei handelt es sich um die üblichen für diese Zwecke bekannten Katalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Katalysatoren sind insbesondere Zinkverbindungen, wie z. B. Zink-(II)-stearat, Zink(II)-n-octanoat, Zink-(II)-2-ethyl-1-hexanoat, Zink-(II)-naphthenat oder Zink-(II)-acetylacetonat, Zinnverbindungen, wie z. B. Zinn(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(ethylacetoacetat), Eisen-(III)-chlorid, Kaliumoctoat, Mangan-, Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.
Geeignete, wenngleich weniger bevorzugte Katalysatoren für das Verfahren sind auch solche Katalysatoren, wie sie beispielsweise in der EP-A-0 649 866 Seite 4, Zeile 7 bis Seite 5, Zeile 15 beschrieben sind.

Bevorzugte Katalysatoren für das erfindungsgemäße Verfahren sind Zinkverbindungen der obengenannten Art. Ganz besonders bevorzugt ist die Verwendung von Zink-(II)-n-octanoat, Zink-(II)-2-ethyl-1-hexanoat und/oder Zink-(II)-stearat.

Diese Katalysatoren kommen, falls überhaupt, in einer Menge von 0,001 bis 5 Gew.-%, vorzugsweise 0,005 bis 1 Gew.-%, bezogen auf das Gesamtgewicht der Reaktionspartner zum Einsatz.

Die Polyaddition zur Herstellung der erfindungsgemäßen Polyurethanzubereitung kann besonders bevorzugt in Anwesenheit von Cäsiumsalzen erfolgen, wie in der älteren deutschen Patentanmeldung mit dem Aktenzeichen 10161156.0 vom 12.12.2001 beschrieben. Bevorzugte Cäsiumsalze sind dabei Verbindungen, in denen folgende Anionen eingesetzt werden: F⁻, Cl⁻, ClO⁻, ClO₃⁻, ClO₄⁻, Br-, J-, JO₃⁻, CN-, OCN-, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ-₁O₂)⁻, (CₙH₂ₙ₋₃O₂) sowie (Cₙ₊₁H₂ₙ-₂O₄)²⁻, wobei n für die Zahlen 1 bis 20 steht.

Besonders bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Ganz besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Die Cäsiumsalze werden in Mengen von 0,01 bis 10 mmol Cäsiumsalz pro kg lösungsmittelfreier Ansatz eingesetzt. Bevorzugt werden sie in Mengen von 0,05 bis 2 mmol Cäsiumsalz pro kg lösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet. Besonders geeignet sind neben Wasser auch Alkohole; ganz besonders geeignet sind Polyole, wie sie auch sonst als Bausteine für Polyurethane verwendet werden, wie z.B. Ethan-, Propan- und Butandiole. Die Verwendung der Cäsiumsalze erlaubt es, die Polyaddition unter den üblichen Bedingungen zu führen.

Die Zugabe zum Reaktionsgemisch kann dabei nach beliebigen Methoden erfolgen. So ist es beispielsweise möglich, den gegebenenfalls mitzuverwendenden Katalysator entweder der Polyisocyanatkomponente (A), (B), (C2) und/oder der Emulgatorkomponente (C1) vor Beginn der eigentlichen Umsetzung zuzumischen. Ebenso ist es möglich, den Katalysator dem Reaktionsgemisch zu einem beliebigen Zeitpunkt während der Reaktion oder im Sinne einer zweistufigen Reaktionsführung auch im Anschluß an die Urethanisierung, d. h. wenn der einem vollständigen Umsatz von Isocyanat und Hydroxylgruppen theoretisch entsprechende NCO-Gehalt erreicht ist, zuzusetzen.

Die Reihenfolge der Vermischung der Komponenten (A), (B) und (C) ist dabei erfindungsgemäß nicht wesentlich, beispielsweise können die Komponenten gleichzeitig miteinander vermischt werden, (C) zumindest teilweise vorgelegt und (A) und/oder (B) dazu hinzugegeben werden oder (A) oder (B) zumindest teilweise vorgelegt, (C) hinzugegeben und die letzte Komponente hinzugegeben werden.

Der Verlauf der Umsetzung kann durch z. B. titrimetrische Bestimmung des NCO-Gehaltes verfolgt werden. Nach Erreichen des angestrebten NCO-Gehaltes wird die Reaktion abgebrochen. Dies kann bei rein thermischer Reaktionsführung beispielsweise durch Abkühlen des Reaktionsgemisches auf Raumtemperatur erfolgen. Bei der Verwendung eines Katalysators der genannten Art wird die Umsetzung im allgemeinen aber durch Zugabe geeigneter Desaktivatoren abgestoppt. Als Desaktivatoren eignen sich beispielsweise anorganische oder organische Säuren, die entsprechenden Säurehalogenide und Alkylierungsmittel. Beispielhaft genannt seien Phosphorsäure, Monochloressigsäure, Dodecylbenzolsulfonsäure, Benzoylchlorid, Dimethylsulfat und vorzugsweise Dibutylphosphat sowie Di-2-ethylhexylphosphat. Die Desaktivierungsmittel können in Mengen von 1 bis 200 Mol-%, vorzugsweise 20 bis 100 Mol-%, bezogen auf die Mole an Katalysator, eingesetzt werden.

Die resultierenden Polyisocyanatgemische weisen in der Regel einen NCO-Gehalt von vorzugsweise 6,0 bis 23,0 Gew.-%, besonders bevorzugt 8,5 bis 22,0 Gew.-% auf.

Die resultierenden Polyisocyanatgemische weisen in der Regel eine Viskosität bei 23 °C von vorzugsweise 0,2 bis 20 Pas, besonders bevorzugt 0,5 bis 8 Pas auf.

Das Verfahren kann gegebenenfalls in einem geeigneten, gegenüber Isocyanatgruppen inerten Lösemittel (D) durchgeführt werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, isoButylmethylketon, 4Methyl-2-pentanon, Cyclohexanon, Cyclopentanon, Toluol, Xylol, Chlorbenzol, Testbenzin, höher substituierte Aromaten, wie sie beispielsweise unter den Bezeichnungen Solventnaphtha®, Solvesso®, Shellsol®, Isopar®, Nappar® und Diasol® im Handel sind, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, sowie bevorzugt Kohlensäureester oder Lactone, die in der EP-A1 697 424, S. 4, Z. 4 bis 32 genannt sind, besonders bevorzugt Dimethylcarbonat, Diethylcarbonat, 1,2-Ethylencarbonat und 1,2-Propylencarbonat, Lactone wie β-Propiolacton, γ-Butyrolacton, ε-Caprolacton und ε-Methylcaprolacton, aber auch beliebige Gemische solcher Lösemittel.

Es ist auch möglich, die Herstellung der erfindungsgemäßen Isocyanate zunächst ohne Lösemittel durchzuführen und das so erhältliche Produkt anschließend in einem Lösemittel (D) aufzunehmen.

Die erfindungsgemäßen Mischungen enthalten in lösungsmittelfreier Form bevorzugt
(A) 30 - 90 Gew%, bevorzugt 50 bis 90 Gew%,
(B) 5 - 60 Gew%, bevorzugt 5 - 50 Gew% und
(C) 5 - 40 Gew% bevorzugt 5 - 50 Gew%,
wobei die Summe aus (A), (B) und (C) 100 Gew% ergibt.

Das Lösungsmittel (D) kann bezogen auf die Gesamtmischung in Mengen von 0 bis 60 Gew% anwesend sein, bevorzugt in Mengen von 0 bis 50 Gew%.

Die erfindungsgemäßen Mischungen können vorzugsweise in Wasser zur Herstellung wäßriger Dispersionen dispergiert werden, besonders bevorzugt werden die erfindungsgemäßen Mischungen in wäßrige Dispersionen eingemischt.

Die erfindungsgemäße Polyisocyanatzubereitung eignet sich zur Modifizierung von wäßrigen Beschichtungsmitteln (Lack, Schutzüberzüge) für z.B. Holz, Holzfurnier, Papier, Pappe, Karton, Textil, Leder, Vlies, Kunststoffoberflächen, Glas, Keramik, mineralische Baustoffe wie Zement-Formsteine und Faserzementplatten, Metalle oder beschichtete Metalle, Klebstoff oder Imprägnierungsmittel, z.B. zum Färben, auf Basis von wäßrigen Dispersionen oder Lösungen eines Feststoffgehaltes von 5 bis 40 Gew.%, vorzugsweise von 5 bis 20 Gew.%. Als Beschichtungsmittel kommen die an sich bekannten wäßrigen Dispersionen von Homo- und Copolymerisaten olefinisch ungesättigter Monomerer oder Polyurethanen oder auch Lösungen von Naturstoffen, wie z.B. von Casein, in Betracht.

Die erfindungsgemäßen Polyisocyanatzubereitungen werden den wäßrigen Beschichtungsmitteln im allgemeinen in einer Menge von 1 bis 25, vorzugsweise von 2,5 bis 20 Gew-%, bezogen auf den Feststoffgehalt des Beschichtungsmittels, zugesetzt.

Sie werden in bekannter Weise durch z.B. Spritzen in einer Menge von 5 bis 50 g Feststoff/m² auf das Substrat aufgebracht.

Geeignete Dispersionen von Homo- oder Copolymerisaten olefinisch ungesättigter Monomerer sind z.B. an sich bekannte Dispersionen von Homo oder Copolymerisaten auf Basis von Vinylestern von Carbonsäuren mit 2 bis 18, vorzugsweise 2 bis 4 Kohlenstoffatomen wie insbesondere Vinylacetat, gegebenenfalls mit bis zu 70 Gew.% bezogen auf Gesamtmenge an olefinisch ungesättigten Monomeren, an anderen olefinisch ungesättigten Monomeren und/oder von Homo- oder Copolymerisaten von (Meth)Acrylsäureestern von Alkoholen mit 1 bis 18, vorzugsweise 1 bis 4 Kohlenstoffatomen wie insbesondere (Meth) Acrylsäure-, -methyl-, -ethyl-, -propyl-, -hydroxyethyl- oder -hydroxypropylestern, gegebenenfalls zusammen mit bis zu 70 Gew.% an anderen olefinisch ungesättigten Monomeren und/ oder Butadien-Styrol-Copolymerisaten mit einem Gehalt an Butadien von ca. 20 bis 60 Gew-% und/oder von anderen Dien-Polymerisaten oder -Copolymerisaten wie Polybutadien oder Mischpolymerisaten von Butadien mit anderen olefinisch ungesättigten Monomeren wie z.B. Styrol, Acrylnitril und/oder Methacrylnitril und/oder wäßrige Dispersionen von Polymerisaten bzw. Copolymerisaten des 2-Chlorbutadien-1,3, gegebenenfalls mit anderen olefinisch ungesättigten Monomeren der oben beispielhaft genannten Art, z.B. solchen eines Chlorgehalts von ca. 30 bis 40 Gew.%, insbesondere eines Chlorgehalts von ca. 36 Gew%.

Bevorzugt werden wäßrige Dispersionen von Copolymerisaten aus 90 bis 99,5 Gew% Acrylaten oder Methacrylaten von 1 bis 4 C-Atomen enthaltenden Alkanolen und 0,5 bis 10 Gew%, jeweils bezogen auf das Copolymerisat, von Hydroxyalkylacrylaten und -methacrylaten mit 2 bis 20 C-Atomen im Hydroxyalkylrest, wie Hydroxyethyl-, Hydroxypropyl- oder Hydroxybutylacrylat oder -methacrylat. Solche Dispersionen sind an sich bekannt und in üblicher Weise durch Emulsionspolymerisation herstellbar (s. Houben-Weyl, Methoden der organischen Chemie, 4. Auflage, Bd. E 20, S.217 ff. ).

Geeignete wäßrige Polyurethandispersionen sind solche der an sich bekannten Art, wie sie z.B. in US-A 3 479 310, GB-A 1 076 688, US-A 4 108 814, US-A 4 092 286, DE-A 2 651 505, US-A 4 190 566, DE-A 2 732 131 oder DE-A 2 811 148 beschrieben sind.

Die eingesetzten wäßrigen Dispersionen können die üblichen Hilfs- und Zusatzmittel enthalten. Hierzu gehören beispielsweise Füllstoffe, wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexamethaphosphat, Naphthalinsulfonsäure, Ammonium- oder Natriumpolyacrylsäuresalzen eingesetzt werden, wobei die Netzmittel im allgemeinen in Mengen von 0,2 bis 0,6 Gew%, bezogen auf Füllstoff, zugesetzt werden.

Weitere geeignete Hilfsmittel sind z.B. in Mengen von 0,01 bis 1 Gew.%, bezogen auf die Dispersion, einzusetzende organische Verdickungsmittel wie z.B. Zellulose-Derivate, Alginate, Stärke oder Stärkederivate oder Polyacrylsäure oder in Mengen von 0,05 bis 5 Gew.%, bezogen auf die Dispersion, einzusetzende anorganische Verdickungsmittel wie z.B. Bentonite.

Auch Fungizide zur Konservierung können den Dispersionen zugesetzt werden. Diese kommen im allgemeinen in Mengen von 0,02 bis 1 Gew.-%, bezogen auf die Dispersion, zum Einsatz. Geeignete Fungizide sind beispielsweise Phenolund Kresol-Derivate oder Zinnorganische Verbindungen.

Substrate für Imprägnierungen sind z.B. synthetische oder nichtsynthetische Fasern bzw. deren Gewebe oder Vliese.

Die erfindungsgemäßen Mischungen können sehr feinteilig in wäßrigen Dispersionen dispergiert werden. Die erhaltenen Dispersionen sind sehr lagerstabil. Darüber hinaus benötigt man weniger Zusatzmenge des wasseremulgierbaren Polyisocyanats um die gewünschten Eigenschaften der Dispersion einzustellen bzw. bei der Anwendung zu erreichen.

Die erfindungsgemäßen Mischungen können selbstverständlich mit üblichen Hilfs- und Zusatzmitteln der Lacktechnologie versetzt werden. Hierzu gehören beispielsweise Entschäumer, Verdicker, Verlaufshilfsmittel, Pigmente, Emulgatoren, Dispergierhilfsmittel und auch Lösemittel. Die gewünschte Verarbeitungsviskosität wird durch Zugabe von Wasser eingestellt.

Zur Herstellung der Dispersionen reichen in den meisten Fällen einfache Emulgiertechniken, z.B. mit einem mechanischen Rührer, oder oftmals auch eine einfache Mischung der beiden Komponenten per Hand aus, um Dispersionen mit sehr guten Eigenschaften zu erzielen. Selbstverständlich können aber auch Mischtechniken mit höherer Scherenergie, wie z.B. Strahldispergierung, eingesetzt werden.

Die die erfindungsgemäßen Mischungen enthaltenden Beschichtungsmittel können insbesondere als Grundierungen, Füller, pigmentierte Decklacke und Klarlacke im Bereich Autoreparatur- oder Großfahrzeuglackierung eingesetzt werden. Besonders geeignet sind die Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Die die erfindungsgemäßen Mischungen enthaltenden Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren appliziert werden.

Die Trocknung und Aushärtung der Beschichtungen erfolgt im allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden.

Obwohl in einigen Veröffentlichungen, die die Herstellung wasseremulgierbarer Polyisocyanate zum Gegenstand haben, beispielsweise in der DE-A1 40 01 783, EP-A2 206 059, EP-A2 486 881, EP-A1 540 985 oder DE-A1 199 58 170, Mischungen von Isocyanuraten und/ oder Biureten des 1,6-Diisocyanatohexan (HDI) und Isocyanuraten des 1-Isocyanato-3,5,5-trimethyl-5-isocyanatomethyl-cyclohexan (IPDI) mit Emulgatoren innerhalb langer Listen geeigneter Ausgangsisocyanate genannt werden, konnte der Fachmann keiner der obengenannten Veröffentlichungen irgendeinen konkreten Hinweis darauf entnehmen, daß die erfindungsgemäßen Mischungen eine verbesserte Härte, einen verbesserten Härteanstieg und eine gleichzeitige leichte Emulgierbarkeit zeigen. Weiterhin zeigen die erfindungsgemäß Mischungen gegenüber dem Stand der Technik eine höhere "Topfzeit", d.i. die Zeitspanne, in der ein Ansatz nach dem Mischen aller Bestandteile verarbeitbar bleibt und sich nicht beispielsweise entmischt oder vorzeitig härtet.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

### Prüfungen

Alle Proben wurden in der unten angeführten Formulierung getestet:

### Bindemittel Dispersion

| | |
|---|---|
| 240 T | Daotan® 1225 (Fa. Solutia) |
| 119 T | Plusaqua® V 608 (Fa. Omya) |
| 310 T | dest. Wasser |
| 18 T | Fluorad® FC 430 (Fa. 3M) |
| 9 T | AMP 90 (Fa. Angus Chemie) |

Zu einem Teil dieser Bindemittel-Dispersion wurde unter Rühren ein Teil des Polyisocyanats zugegeben (Angaben beziehen sich auf nicht flüchtige Gewichtsanteile).

Die fertige Emulsion wurde mit einem 200 µm Rakel auf ein entfettetes Blech aufgetragen, 20 Minuten bei Raumtemperatur abgelüftet, bevor das lackierte Blech in einem Gradientenofen 30 Minuten eingebrannt wurde. Die fertigen Bleche wurden vor der Prüfung 24 Stunden in einem Normklima gelagert (50% Luftfeuchtigkeit, 23°C). Danach wurde die Härte der Lackfilme mittels Pendeldämpfungsprüfung gem. DIN 53157 (König-Härte) gemessen. Messwerte sind in Pendelschlägen angegeben (je höher die Anzahl der Pendelschläge desto härter der Lackfilm).

Isocyanat A1:
HDI-Isocyanurat mit einem NCO-Gehalt von 22,2% und einer Viskosität bei 23°C von 2,8 Pas

Isocyanat B:
IPDI-Isocyanurat mit einem NCO-Gehalt von 17,2% (Vestanat® T 1890/100 der Degussa)

Abkürzungen:
- HDI: Hexamethylendiisocyanat
- IPDI: Isophorondiisocyanat
- PC: Propylencarbonat
- T: Gewichtsteile

### Beispiel 1 - Hydrophiliertes Isocyanat = Polyisocyanat a1

Zu 150 g (0,30 mol) eines auf Methanol gestarteten, monofunktionellen Polyethylenoxids der OH-Zahl 112 wurden bei 60°C 26 g (0,146 mol) eines Gemisches aus 80 Teilen 2,4-Toluylendiisocyanat und 20 Teilen 2,6-Toluylendiisocyanat gegeben und 60 min gerührt (= c2). Der so erhaltene Emulgator wurde auf 30°C gekühlt und 900 g Isocyanat A1 eingerührt. Man erhält ein wasseremulgierbares Polyisocyanat (= a1) mit einem NCO-Gehalt von 18,4 % und einer Viskosität bei 23 °C von 3,0 Pas.

Isocyanat a1, Isocyanat B und Propylencarbonat wurden in den in der Tabelle angegebenen Verhältnissen gemischt.

| Beispiel Nr. 1 | Isocyanat a1 | Isocyanat B | PC | NCO-Gehalt |
|---|---|---|---|---|
| | (g) | (g) | (g) | (%) |
| 1 | 28 | 5 | 22 | 10,9 |
| 2 | 24,5 | 7,5 | 21,33 | 10,8 |
| 3 | 21 | 10 | 20,67 | 10,8 |
| 4 | 17,5 | 12,5 | 20 | 10,7 |
| Vergleich, V | 30 | ./. | 20 | 11,0 |

### Ergebnisse: Beispiel 1

| | Pendeldämpfung | | | | |
|---|---|---|---|---|---|
| Einbrenn-Temp | 1 | 2 | 3 | 4 | V |
| [°C] | | | | | |
| 60 | 44 | 41 | 43 | 52 | 26 |
| 70 | 67 | 68 | 64 | 74 | 36 |
| 80 | 93 | 87 | 107 | 105 | 42 |
| 90 | 98 | 108 | 122 | 124 | 45 |
| 100 | 121 | 126 | 126 | 136 | 47 |
| 110 | 125 | 128 | 130 | 138 | 53 |
| 120 | 126 | 131 | 131 | 140 | 94 |
| 130 | 126 | 132 | 132 | 141 | 99 |
| 140 | 126 | 132 | 136 | 141 | 99 |
| 150 | 130 | 132 | 138 | 141 | 101 |

### Beispiel 2

lösungsmittelhaltiges, hydrophiliertes Isocyanat B = Isocyanat b1 14 g (0,014 mol) eines auf Methanol gestartetes, monofunktionelles Polyethylenoxids der Molekularmasse 1000 wird zu 125 g (0,51 eq NCO) Isocyanat B, gelöst in 53,6 g Solvesso® 100 (ca. 28 Gew.%), zugegeben. Man läßt für 3 h bei 85°C rühren und erhält nach Abkühlen eine trübe, viskose Paste mit einem NCO-Gehalt von 11% ( = b1), welche sich unter erheblichen mechanischen Aufwand in eine wässrige, grobteilige Emulsion überführen läßt.

Durch Herstellen von Mischungen aus hydrophiliertem Isocyanat b1 und aus dem in Beispiel 1 beschriebenen hydrophilierten Isocyanat a1 unter Zugabe von Propylencarbonat erhält man eine leicht emulgierbare Isocyanat Mischung, die eine feinteilige Emulsion ergibt.

| Beispiel Nr. 2 | Isocyanat a1 | Isocyanat b1 | PC | NCO-Gehalt |
|---|---|---|---|---|
| | (Gew. %) | (Gew.%) | (Gew.%) | (%) |
| 1 | 56 | 24 | 20 | 12,9 |
| 2 | 60 | 20 | 20 | 12,9 |
| 3 | 68 | 12 | 20 | 13,1 |
| 4 | 76 | 4 | 20 | 13,4 |
| Vergleich, V | 80 | - | 20 | 13,5 |

Ergebnisse Beispiel Nr. 2

| | Pendeldämpfung | | | | |
|---|---|---|---|---|---|
| Einbrenn-Temp. [°C] | 1 | 2 | 3 | 4 | V |
| 60 | 37 | 29 | 21 | 27 | 19 |
| 70 | 64 | 58 | 48 | 51 | 40 |
| 80 | 76 | 88 | 72 | 78 | 59 |
| 90 | 94 | 109 | 87 | 89 | 76 |
| 100 | 99 | 114 | 95 | 91 | 85 |
| 110 | 105 | 119 | 96 | 92 | 86 |
| 120 | 108 | 122 | 99 | 97 | 85 |

## Patentansprüche

1. Mischungen, enthaltend
(A) ein Isocyanurat und/oder Biuret des 1,6-Diisocyanatohexan (HDI),
(B) ein Isocyanurat des 1-Isocyanato-3,5,5-trimethyl-5-isocyanatomethyl-cyclohexan (IPDI),
(C) mindestens einen Emulgator, erhältlich durch Umsetzung mindestens eines Diisocyanats (C2) ausgewählt aus Tetramethylendiisocyanat, Hexamethylendiisocyanat (HDI), Dodecamethylendiisocyanat, 1,4-Diisocyanatocyclohexan, 4,4'-Di(isocyanatocyclohexyl)methan, Trimethylhexandiisocyanat, Tetramethylhexandiisocyanat, 1-Isocyanato-3,3,5-trimethyl-5-(isocyanatomethyl)cyclohexan (IPDI), 2,4- oder 2,6-Toluylendiisocyanat und deren Isomerengemische, Tetramethylxylylendiisocyanat, p-Xylylendiisocyanat, 2,4'- oder 4,4'-Diisocyanatodiphenylmethan mit mindestens einer Komponente (C1), die mindestens eine gegenüber Isocyanatgruppen reaktive Gruppe und mindestens eine hydrophile Gruppe enthält, und
(D) gegebenenfalls Lösungsmittel.

2. Mischungen nach Anspruch 1, enthaltend in lösungsmittelfreier Form
(A) 40 - 90 Gew%,
(B) 5 - 60 Gew% und
(C) 5 - 4 Gew%,
wobei die Summe aus (A), (B) und (C) 100 Gew% ergibt.

3. Mischungen gemäß Anspruch 1, **dadurch gekennzeichnet, daß** die Komponente (C1) genau eine gegenüber Isocyanatgruppen reaktive Gruppe und genau eine nichtionische hydrophile Gruppe enthält.

4. Mischungen gemäß Anspruch 3, **dadurch gekennzeichnet, daß** die Komponente (C1) mindestens ein Polyalkylenoxidpolyetheralkohol ist, erhältlich durch Umsetzung mindestens eines gesättigten aliphatischen Alkohols mit 1 bis 4 Kohlenstoffatomen im Alkylrest mit Ethylenoxid, Propylenoxid oder deren Gemischen.

5. Mischungen gemäß Anspruch 4, **dadurch gekennzeichnet, daß** der Polyalkylenoxidpolyetheralkohol im statistischen Mittel 5 bis 35 Ethylenoxideinheiten pro Molekül aufweist.

6. Mischungen gemäß einem der vorstehenden Ansprüche, **dadurch gekennzeichnet, daß** zusätzlich mindestens eine der Komponenten (A) und/oder (B) zumindest teilweise mit einer Komponente (C1) umgesetzt worden sind.

7. Mischungen gemäß einem der vorstehenden Ansprüche, **dadurch gekennzeichnet, daß** als Lösungsmittel (D) ein Kohlensäureester oder Lacton verwendet wird.

8. Mischungen gemäß einem der vorstehenden Ansprüche, **dadurch gekennzeichnet, daß** das Lösungsmittel in Mengen bis zu 60 Gew% bezogen auf die Gesamtmischung enthalten ist.

9. Polymerdispersion, enthaltend eine Mischung gemäß einem der vorstehenden Ansprüche.

10. Beschichtungsmasse, enthaltend eine Mischung gemäß einem der Ansprüche 1 bis 8 oder eine Polymerdispersion gemäß Anspruch 9.

11. Verfahren zur Beschichtung von Substraten, **dadurch gekennzeichnet, daß** man eine Mischung gemäß einem der Ansprüche 1 bis 8 als Beschichtungsmittel einsetzt.

12. Verwendung einer Mischung gemäß einem der Ansprüche 1 bis 6 als Beschichtungsmittel für Holz, Holzfurnier, Papier, Pappe, Karton, Textil, Leder, Vlies, Kunststoffoberflächen, Glas, Keramik, mineralische Baustoffe, Metalle oder beschichtete Metalle oder als Klebstoff.

13. Verfahren zum Verkleben von Substraten, **dadurch gekennzeichnet, daß** man eine Mischung gemäß einem der Ansprüche 1 bis 8 oder eine Polymerdispersion gemäß Anspruch 9 einsetzt.

## Claims

1. A mixture comprising
(A) an isocyanurate and/or biuret of 1,6-diisocyanatohexane (HDI),
(B) an isocyanurate of 1-isocyanato-3,5,5-trimethyl-5-isocyanatomethylcyclohexane (IPDI),
(C) at least one emulsifier, obtainable by reacting at least one diisocyanate (C2) selected from tetramethylene diisocyanate, hexamethylene diisocyanate (HDI), dodecamethylene diisocyanate, 1,4-diisocyanatocyclohexane, 4,4'-di(isocyanatocyclohexyl)methane, trimethylhexane diisocyanate, tetramethylhexane diisocyanate, 1-isocyanato-3,3,5-trimethyl-5-(isocyanatomethyl)cyclohexane (IPDI), 2,4- or 2,6-tolylene diisocyanate and the isomer mixtures thereof, tetramethylxylylene diisocyanate, p-xylylene diisocyanate, 2,4'- or 4,4'-diisocyanatodiphenylmethane with at least one component (C1) containing at least one group which is reactive toward isocyanate groups and containing at least one hydrophilic group, and
(D) if desired, solvent.

2. The mixture according to claim 1, comprising in solvent-free form
(A) 40 - 90% by weight,
(B) 5 - 60% by weight, and
(C) 5 - 40% by weight,
the sum of (A), (B), and (C) making 100% by weight.

3. The mixture according to claim 1, wherein component (C1) contains exactly one isocyanate-reactive group and exactly one nonionic hydrophilic group.

4. The mixture according to claim 3, wherein component (C1) is at least one polyalkylene oxide polyether alcohol obtainable by reacting at least one saturated aliphatic alcohol having 1 to 4 carbon atoms in the alkyl radical with ethylene oxide, propylene oxide or a mixture thereof.

5. The mixture according to claim 4, wherein the polyalkylene oxide polyether alcohol contains on average from 5 to 35 ethylene oxide units per molecule.

6. The mixture according to any of the preceding claims, wherein at least one of the components (A) and/or (B) has additionally been at least partly reacted with a component (C1).

7. The mixture according to any of the preceding claims, wherein a carbonic ester or lactone is used as solvent (D).

8. The mixture according to any of the preceding claims, wherein the solvent is present in amounts up to 60% by weight based on the total mixture.

9. A polymer dispersion comprising a mixture according to any of the preceding claims.

10. A coating composition comprising a mixture according to any of claims 1 to 8 or a polymer dispersion according to claim 9.

11. A method of coating substrates which comprises using a mixture according to any of claims 1 to 8 as coating material.

12. The use of a mixture according to any of claims 1 to 6 as a coating material for wood, wood veneer, paper, paperboard, cardboard, textile, leather, nonwoven, plastics surfaces, glass, ceramic, mineral building materials or coated or uncoated metals, or as an adhesive.

13. A method of adhesively bonding substrates which comprises using a mixture according to any of claims 1 to 8 or a polymer dispersion according to claim 9.

## Revendications

1. Mélanges, contenant
(A) un isocyanurate et/ou un biuret du 1,6-diisocyanatohexane (HDI),
(B) un isocyanurate du 1-isocyanato-3,5,5-triméthyl-5-isocyanatométhylcyclohexane (IPDI),
(C) au moins un émulsifiant, pouvant être obtenu par transformation d'au moins un diisocyanate (C2) choisi parmi le tétraméthylènediisocyanate, l'hexaméthylènediisocyanate (HDI), le dodécaméthylènediisocyanate, le 1,4-diisocyanatocyclohexane, le 4,4'-di(isocyanatocyclohexyl)méthane, le triméthylhexanediisocyanate, le tétraméthylhexanediisocyanate, le 1-isocyanato-3,3,5-triméthyl-5-(isocyanatométhyl)cyclohexane (IPDI), le 2,4-toluylènediisocyanate ou le 2,6-toluylènediisocyanate et leurs mélanges d'isomères, le tétraméthylxylylènediisocyanate, le p-xylylènediisocyanate, le 2,4'-diisocyanatodiphénylméthane ou le 4,4'-diisocyanatodiphénylméthane avec au moins un composant (C1), qui contient au moins un groupe réactif par rapport aux groupes isocyanate et au moins un groupe hydrophile, et
(D) le cas échéant des solvants.

2. Mélanges selon la revendication 1, contenant, sous une forme exempte de solvant,
(A) à 40-90% en poids,
(B) à 5-60% en poids et
(C) à 5-40% en poids,
la somme de (A), (B) et (C) étant égale à 100% en poids.

3. Mélanges selon la revendication 1, **caractérisés en ce que** le composant (C1) contient exactement un groupe réactif par rapport aux groupes isocyanate et exactement un groupe hydrophile non ionique.

4. Mélanges selon la revendication 3, **caractérisés en ce que** le composant (C1) est au moins un poly(oxyde d'alkylène)-polyétheralcool pouvant être obtenu par transformation d'au moins un alcool aliphatique saturé comprenant 1 à 4 atomes de carbone dans le radical alkyle avec de l'oxyde d'éthylène, de l'oxyde de propylène ou leurs mélanges.

5. Mélanges selon la revendication 4, **caractérisés en ce que** le poly(oxyde d'alkylène)-polyétheralcool présente en moyenne statistique 5 à 35 unités d'oxyde d'éthylène par molécule.

6. Mélanges selon l'une quelconque des revendications précédentes, **caractérisés en ce qu'**en plus au moins un des composants (A) et/ou (B) a été transformé, au moins partiellement, avec un composant (C1).

7. Mélanges selon l'une quelconque des revendications précédentes, **caractérisés en ce qu'**on utilise, comme solvant (D), un ester de l'acide carbonique ou une lactone.

8. Mélanges selon l'une quelconque des revendications précédentes, **caractérisés en ce que** le solvant est contenu en des quantités jusqu'à 60% en poids par rapport au mélange total.

9. Dispersion de polymères, contenant un mélange selon l'une quelconque des revendications précédentes.

10. Masse de revêtement contenant un mélange selon l'une quelconque des revendications 1 à 8 ou une dispersion de polymères selon la revendication 9.

11. Procédé pour le revêtement de substrats, **caractérisé en ce qu'**on utilise un mélange selon l'une quelconque des revendications 1 à 8 comme agent de revêtement.

12. Utilisation d'un mélange selon l'une quelconque des revendications 1 à 6 comme agent de revêtement pour le bois, les placages en bois, le papier, le carton, le carton ondulé, le textile, le cuir, le non-tissé, les surfaces en matériau synthétique, le verre, la céramique, les matériaux de construction minéraux, les métaux ou les métaux revêtus ou comme adhésif.

13. Procédé pour le collage de substrats, **caractérisé en ce qu'**on utilise un mélange selon l'une quelconque des revendications 1 à 8 ou une dispersion de polymères selon la revendication 9.
